# DEMANDE DE BREVET EUROPEEN

(11) **EP 1 124 174 A1**
(43) Date de publication de la demande: **16.08.2001**
(21) Numéro de dépôt: 01400333.9
(22) Date de dépôt: 09.02.2001
(51) Int. Cl.: G06F 3/00

(54) **Système de présentation visuelle d'une espace virtuel à trois dimensions**

(30) Priorité: 10.02.2000 FR 0001639
(71) Demandeur: Renault, 92100 Boulogne Billancourt (FR)
(72) Inventeur: Kemeni, Andras, 75116 Paris (FR); Regnier, Stéphane, 91430 Igny (FR)

(57) **Abrégé**

Système (10) de présentation visuelle d'un espace virtuel à trois dimensions, du type comprenant des moyens de génération d'images (12), adaptés pour transmettre des signaux représentatifs d'images à des moyens de restitution d'images (15) à un utilisateur, et adaptés pour générer les signaux représentatifs d'images à partir de premières données émises par un premier capteur de position (16), solidaire des moyens de restitution d'images (15), et de deuxièmes données émises par un second capteur de position (17), placé à une position fixe dans le système (10), les moyens de restitution d'images (15) étant adaptés pour diffuser des premières images à destination de l'oeil droit de l'utilisateur, et des secondes images à destination de l'oeil gauche de l'utilisateur, caractérisé en ce que les moyens de génération d'images (12) comprennent un premier module de génération d'images (26) adapté pour générer des premiers signaux représentatifs des premières images et un deuxième module de génération d'images (27) adapté pour générer des seconds signaux représentatifs des secondes images, les deux modules de génération d'images (26,27) échangeant des données entre eux de façon à assurer une cohérence temporelle lors de la génération desdits premiers signaux et desdits deuxièmes signaux.

## Description

La présente invention se rapporte au domaine technique de la présentation visuelle d'espaces virtuels en trois dimensions.

Les systèmes de présentation visuelle d'espaces virtuels actuels comportent généralement des moyens de restitution d'images qui sont reliés à des moyens de génération d'images, eux-mêmes pouvant accéder à une base de données contenant , par exemple, les paramètres des images à transmettre aux moyens de restitution. De préférence, les moyens de restitution d'images consistent en un casque, plus ou moins intégral, porté par l'utilisateur, de façon à ce que celui-ci ne perçoive plus que les images émises par les moyens de restitution d'images.

Les moyens de restitution peuvent transmettre à l'utilisateur une unique image. Dans ce cas, l'espace virtuel est dit à deux dimensions. Ils peuvent aussi consister en deux unités, l'une restituant une image spécifiquement pour l'oeil droit de l'utilisateur, l'autre spécifiquement pour l'oeil gauche. Chaque unité émet alors une image légèrement différente l'une de l'autre afin que l'utilisateur ait la sensation d'une vision stéréoscopique. L'espace virtuel présenté est dit alors à trois dimensions.

L'utilisation de tels systèmes dans le cadre de la vente de produits, tels que des véhicules automobiles, paraît particulièrement adaptée. En effet, la base de donnée alimentant les moyens de génération d'images permet la présentation, de façon réaliste, à un client, de l'ensemble de la gamme de véhicules proposé par un constructeur automobile, et pour chaque véhicule, de toutes les versions possibles, et ce, sans nécessiter la présence physique des véhicules sur le lieu de vente.

Toutefois, de façon à ce que la présentation visuelle de l'espace virtuel soit satisfaisante pour l'utilisateur, il est nécessaire qu'elle paraisse la plus réaliste possible. De ce fait, la présentation visuelle d'un espace virtuel à trois dimensions est préférable à une présentation à deux dimensions, en particulier dans le domaine de la vente. Elle doit, de plus, présenter une précision de détails suffisante, et une fluidité acceptable pour l'utilisateur.

Ces paramètres dépendent actuellement essentiellement des capacités de calcul des moyens de génération d'images. Actuellement, un générateur d'images, pour une présentation visuelle d'un espace virtuel à trois dimensions, crée alternativement les deux images nécessaires à l'obtention d'une vision stéréoscopique. Dans ce cas, les moyens de restitution sont adaptés pour décoder le signal émis par les moyens de génération d'images afin d'envoyer alternativement une image à l'unité dédiée à l'oeil droit, et à celle dédiée à l'oeil gauche.

La fréquence de mise à jour de chaque image perçue par l'utilisateur est divisée par deux par rapport à la fréquence d'émission des images par les moyens de génération d'images. Les capacités de calcul nécessaires pour obtenir une fluidité satisfaisante, avec une précision de détails acceptable, peuvent requérir des capacités de calcul entraînant un surcoût du système de présentation visuelle, ce qui représente un facteur pénalisant pour en généraliser l'utilisation.

La présente invention vise à obtenir un système de présentation visuelle d'un espace virtuel à trois dimensions possédant une fluidité et une précision des images transmises à l'utilisateur satisfaisantes tout en présentant un coût raisonnable.

Dans ce but, elle propose un système de visualisation virtuelle à trois dimensions, du type comprenant des moyens de génération d'images, adaptés pour transmettre des signaux représentatifs d'images à des moyens de restitution d'images à un utilisateur, et adaptés pour générer les signaux représentatifs d'images à partir de premières données émises par un premier capteur de position, solidaire des moyens de restitution d'images, et de deuxièmes données émises par un second capteur de position, placé à une position fixe dans le système, les moyens de restitution d'images étant adaptés pour diffuser des premières images à destination de l'oeil droit de l'utilisateur, et des secondes images à destination de l'oeil gauche de l'utilisateur, caractérisé en ce que les moyens de génération d'images comprennent un premier module adapté pour générer des premiers signaux représentatifs des premières images et un deuxième module adapté pour générer des seconds signaux représentatifs des secondes images, les deux modules échangeant des données entre eux de façon à assurer une cohérence temporelle lors de la génération desdits premiers signaux et desdits deuxièmes signaux.

Selon une autre caractéristique de l'invention, les deux modules échangent des données entre eux pour synchroniser l'envoi aux moyens de restitution d'images des premiers signaux et des deuxièmes signaux.

Selon une autre caractéristique de l'invention, le premier module et le deuxième module consistent en des calculateurs et sont reliés par une liaison série ou réseau.

Selon une autre caractéristique de l'invention, les moyens de restitution d'images comprennent un élément de vision diffusant les premières images et les deuxièmes images, ledit module de vision étant placé au niveau des yeux de l'utilisateur.

Selon une autre caractéristique de l'invention, l'élément de vision est relié à des éléments de maintien s'adaptant sur le crâne de l'utilisateur et permettant le maintien de l'élément de vision au niveau des yeux de l'utilisateur.

Selon une autre caractéristique de l'invention, l'élément de vision comporte des éléments de préhension au moyen desquels l'élément de vision est maintenu manuellement au niveau des yeux de l'utilisateur.

Selon une autre caractéristique de l'invention, les moyens de génération d'images comprennent en outre une base de données sur laquelle sont mémorisées des données à partir desquelles le premier module et le second module génèrent respectivement les premières et les deuxièmes images.

Selon une autre caractéristique de l'invention, les moyens de génération d'images sont reliés à une interface homme/machine adaptée pour leur transmettre des données, émises par l'utilisateur et/ou une tierce personne, à partir desquelles le premier module et le second module génèrent respectivement les premières et les deuxièmes images.

Selon une autre caractéristique de l'invention, les premières images et les secondes images simulent un véhicule.

D'autres caractéristiques et avantages de l'invention apparaîtront à la lecture de la description qui va suivre en référence aux dessins dans lesquels :
- la figure 1 présente, de façon schématique, le système selon un premier mode de réalisation de l'invention,
- la figure 2 présente, de façon schématique, le système selon un second mode de réalisation de l'invention,
- la figure 3 présente de façon schématique, l'architecture des moyens de génération d'image du système, et des éléments associés, selon l'invention.

Dans la description qui suit, les éléments identiques ou similaires seront repérés par les mêmes chiffres de référence.

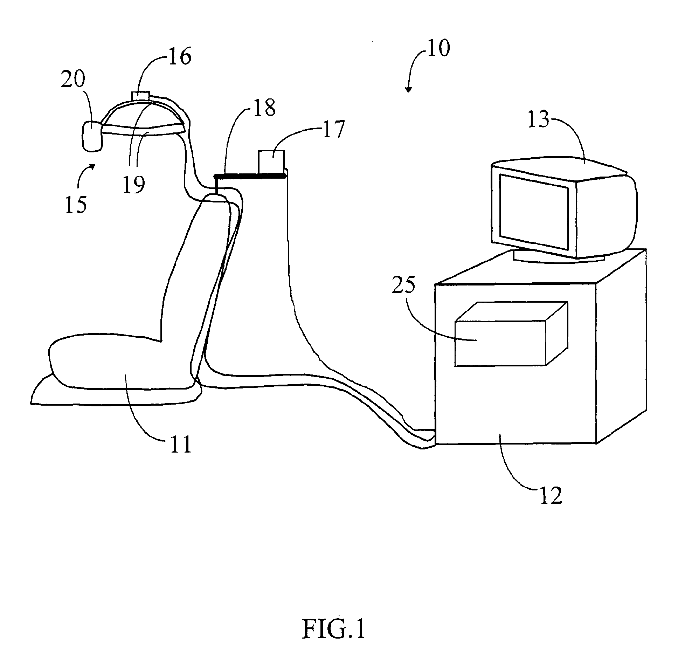

Selon un premier mode de réalisation, représenté sur la figure 1, le système 10 de présentation visuelle d'espaces virtuels se compose de moyens de restitution d'images 15 recevant des signaux émis par des moyens de génération d'images 12. Les moyens de restitution d'images 15 se composent d'un élément de vision 20 qu'un utilisateur (non représenté) vient placer, à sa convenance, au niveau de ses yeux, au moyen d'éléments de maintien 19.

L'élément de vision 20 contient deux unités d'affichage d'images (non visibles sur la figure 1), la première restituant des premières images qui sont perçues uniquement par l'oeil gauche de l'utilisateur, et la seconde restituant des secondes images perçues uniquement par l'oeil droit de l'utilisateur. La vision stéréoscopique est obtenue par le fait que les images restituées par les deux unités sont, à un même moment, légèrement différentes.

Les moyens de génération d'images 12 sont reliés à un capteur de position statique 17, fixe, et à un capteur de position mobile 16, solidaire des moyens de restitution d'images 15. Ces capteurs 16,17 sont connus de l'homme du métier et peuvent être du type optiques, inertiels, électromagnétiques ou mécaniques. Ils envoient des signaux vers les moyens de génération d'images 12, à partir desquels ceux-ci déterminent la position et l'orientation du capteur mobile 16 par rapport au capteur fixe 17.

Les moyens de génération d'images 12 comprennent une base de données 25 contenant divers paramètres à partir desquels les moyens de génération d'images 12 élaborent les différentes images envoyées aux moyens de restitution d'images 15. Les paramètres présents dans la base de données 25 sont relatifs au type d'image que l'on souhaite voir apparaître dans la présentation.

Finalement, les moyens de génération d'images 12 sont reliés à une interface homme machine 13, comprenant, par exemple, un écran d'affichage et un clavier de saisie de données, au moyen desquels l'utilisateur, ou une tierce personne, sélectionne différents paramètres de la base de données 25 qui seront utilisés par les moyens de génération d'images 12.

Selon une variante du premier mode de réalisation, le capteur de position statique 17 est solidaire d'un siège 11 sur lequel est assis l'utilisateur pendant une séance de présentation visuelle d'espaces virtuels.

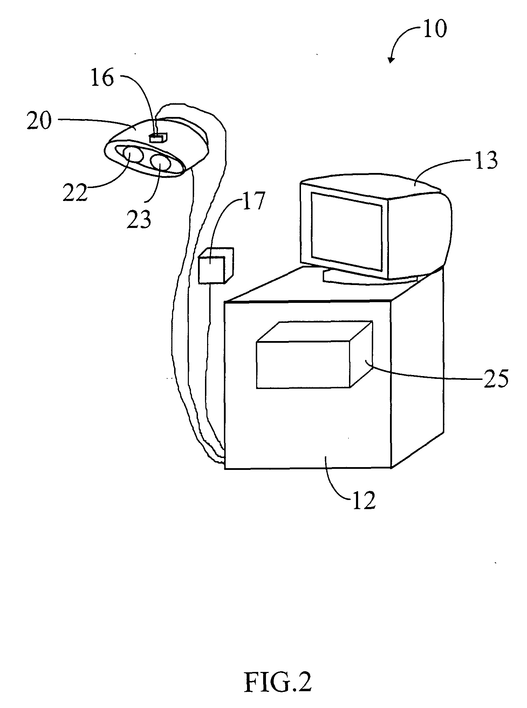

La figure 2 représente un second mode de réalisation du système 10 selon l'invention. Les moyens de restitution d'image 15 se composent, dans ce deuxième mode de réalisation, de l'élément de vision 20, comprenant deux unités 22,23 d'affichage des images, l'ensemble se présentant sous l'aspect d'une paire de jumelles. L'élément de vision 20 est conformé pour faciliter sa préhension par l'utilisateur. Le capteur de position mobile 16 est, dans ce deuxième mode de réalisation, solidaire du support 21, tandis que le capteur de position statique 17 est de préférence fixé au niveau des moyens de génération d'images 12.

Selon les premier et second modes de réalisation de l'invention, le capteur de position mobile 16 étant lié aux moyens de restitution d'images 15, sa position et son orientation représentent celles des moyens de restitution d'images 15, c'est-à-dire celles de la tête de l'utilisateur lorsque celui-ci a placé l'élément de vision 20 au niveau de ses yeux.

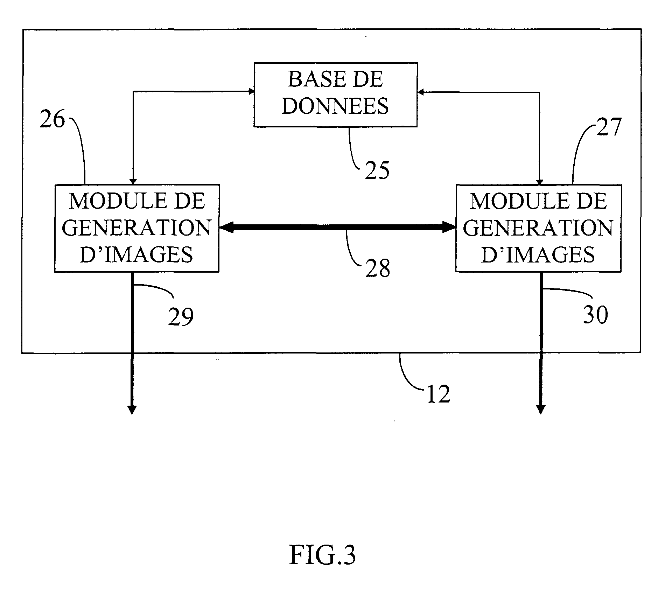

La figure 3 représente de façon plus précise certains éléments constituant les moyens de génération d'images 12 pour les deux modes de réalisation de la présente invention. Les différents signaux représentant des images sont élaborés par deux modules de génération d'images, respectivement 26 et 27. Chaque module de génération 26,27 se compose, de façon connue, d'un microprocesseur associé à une zone de mémoire, et est relié à la base de données 25 dans laquelle il peut lire les données mémorisées. Chaque module de génération d'images 26,27 reçoit les signaux émis par le capteur de position statique 17 et le capteur de position mobile 16. Chaque module 26,27 est adapté pour créer et émettre un signal représentatif d'une image, appelé signal vidéo, qui est fonction à la fois des paramètres de la base de données 25 et des signaux émis par les capteurs de position statique 17 et mobile 16.

Le signal vidéo est émis par chaque module de génération d'images 26,27 sur un canal vidéo 29,30. De préférence, chaque unité d'affichage 22,23 des moyens de restitution d'images 15 comporte sa propre entrée. Un canal vidéo 29,30 peut être branché directement sur une unité d'affichage d'images 22,23 qui restitue une image à partir du signal vidéo émis par le module de génération d'images 26,27 associé.

Selon une variante de l'invention, les moyens de restitution d'images 15 ne comportent qu'une entrée de signal vidéo. Dans ce cas, il est nécessaire d'utiliser un module intermédiaire (non représenté) comprenant deux entrées reliées aux canaux 29,30 et une sortie reliée aux moyens de restitution d'images 15. Ce module intermédiaire permet la conversion des deux signaux émis par les deux modules de génération d'images 26,27 en un signal utilisable par les moyens de restitution d'images 15.

Les deux modules de génération d'images 26,27 sont reliés par une liaison série 28 de façon à échanger des données entre elles pour réaliser un envoi synchronisé de signaux vidéo. Ils peuvent aussi être reliés par une liaison réseau.

Un protocole de communication est mis en place sur les modules de génération d'images 26,27 de façon à permettre l'échange des données sur la liaison série 28. Cet échange est réalisé lorsque chaque module 26,27 a achevé le calcul de la prochaine image à transmettre, et permet l'envoi synchronisé des signaux vidéos.

La présente invention est particulièrement adaptée pour la vente de produits tels que, par exemple, des véhicules. En effet, la base de données peut contenir tous les paramètres décrivant l'ensemble des véhicules d'une gamme, et, pour chaque véhicule de cette gamme, toutes les options possibles. Un client prend place sur le siège et place l'élément de vision selon sa convenance. Le vendeur, grâce à l'interface homme/machine, choisit le produit qu'il souhaite présenter au client. Celui-ci voit virtuellement le produit par les moyens de restitution d'images. Les dimensions et les distances, ainsi que les couleurs et l'ambiance lumineuse sont respectées. Grâce aux capteurs de position, les moyens de génération d'images rafraîchissent instantanément les images transmises, en réaction à tous les mouvements de tête du client. Celui-ci peut ainsi porter son regard dans toutes les directions.

Le vendeur a la possibilité à tout moment, et instantanément, de présenter une autre version ou une variante du produit. Le client peut ainsi disposer d'une vision de l'ensemble de la gamme de produits disponibles, sans que l'organisation commerciale dispose de stocks des produits correspondants.

L'utilisation de deux modules de génération d'images permet d'obtenir, lors d'une présentation visuelle d'espaces virtuels, une fluidité et une précision de détails satisfaisantes pour l'utilisateur sans que le système de présentation visuelle d'espaces virtuels ne présente un coût excessif.

La présente invention n'est nullement limitée au mode de réalisation décrit et illustré qui n'a été donné qu'à titre d'exemple. Au contraire, l'invention comprend tous les équivalents techniques des moyens décrits ainsi que leurs combinaisons si celles-ci sont effectuées suivant son esprit.

## Revendications

1. Système (10) de présentation visuelle d'un espace virtuel à trois dimensions, du type comprenant des moyens de génération d'images (12), adaptés pour transmettre des signaux représentatifs d'images à des moyens de restitution d'images (15) à un utilisateur, et adaptés pour générer les signaux représentatifs d'images à partir de premières données émises par un premier capteur de position (16), solidaire des moyens de restitution d'images (15), et de deuxièmes données émises par un second capteur de position (17), placé à une position fixe dans le système (10), les moyens de restitution d'images (15) étant adaptés pour diffuser des premières images à destination de l'oeil droit de l'utilisateur, et des secondes images à destination de l'oeil gauche de l'utilisateur, caractérisé en ce que les moyens de génération d'images (12) comprennent un premier module de génération d'images (26) adapté pour générer des premiers signaux représentatifs des premières images et un deuxième module de génération d'images (27) adapté pour générer des seconds signaux représentatifs des secondes images, les deux modules de génération d'images (26,27) échangeant des données entre eux de façon à assurer une cohérence temporelle lors de la génération desdits premiers signaux et desdits deuxièmes signaux.

2. Système (10) de présentation visuelle d'un espace virtuel à trois dimensions selon la revendication 1, caractérisé en ce que les deux modules de génération d'images (26,27) échangent des données entre eux pour synchroniser l'envoi aux moyens de restitution d'images (15) des premiers signaux et des deuxièmes signaux.

3. Système (10) de présentation visuelle d'un espace virtuel à trois dimensions selon les revendications 1 ou 2, caractérisé en ce que le premier module de génération d'images (26) et le deuxième module de génération d'images (27) consistent en des calculateurs et en ce qu'ils sont reliés par une liaison série ou réseau.

4. Système (10) de présentation visuelle d'un espace virtuel à trois dimensions selon l'une des revendications 1 à 3, caractérisé en ce que les moyens de restitution d'images (15) comprennent un élément de vision (20) diffusant les premières images et les deuxièmes images, ledit module de vision (20) étant placé au niveau des yeux de l'utilisateur.

5. Système (10) de présentation visuelle d'un espace virtuel à trois dimensions selon la revendication 4, caractérisé en ce que l'élément de vision (20) est relié à des éléments de maintien (19) s'adaptant sur le crâne de l'utilisateur et permettant le maintien de l'élément de vision (20) au niveau des yeux de l'utilisateur.

6. Système (10) de présentation visuelle d'un espace virtuel à trois dimensions selon la revendication 4, caractérisé en ce que l'élément de vision (20) comporte des éléments de préhension (24) au moyen desquels l'élément de vision (20) est maintenu manuellement au niveau des yeux de l'utilisateur.

7. Système (10) de présentation visuelle d'un espace virtuel à trois dimensions selon l'une des revendications 1 à 6, caractérisé en ce que les moyens de génération d'images (12) comprennent en outre une base de données (25) sur laquelle sont mémorisées des données à partir desquelles le premier module de génération d'images (26) et le second module de génération d'images (27) génèrent respectivement les premières et les deuxièmes images.

8. Système (10) de présentation visuelle d'un espace virtuel à trois dimensions selon l'une des revendications 1 à 7, caractérisé en ce que les moyens de génération d'images (12) sont reliés à une interface homme/machine (13) adaptée pour leur transmettre des données, émises par l'utilisateur et/ou une tierce personne, à partir desquelles le premier module de génération d'images (26) et le second module de génération d'images (27) génèrent respectivement les premières et les deuxièmes images.

9. Système (10) de présentation visuelle d'un espace virtuel à trois dimensions selon l'une des revendications 1 à 8, caractérisé en ce que les premières images et les secondes images simulent un véhicule.

10. Système (10) de présentation visuelle d'un espace virtuel à trois dimensions selon l'une des revendications 1 à 9, caractérisé en ce qu'il comprend en outre un siège (11) sur lequel est placé le deuxième capteur de position (17).
